# EUROPEAN PATENT APPLICATION

(11) **EP 0 934 693 A1**
(43) Date of publication of application: **11.08.1999**
(21) Application number: 99200280.8
(22) Date of filing: 01.02.1999
(51) Int. Cl.: A01J 25/06, A01J 25/00, A01J 25/11

(54) **Curd ripening apparatus**

(30) Priority: 06.02.1998 IT TO980096
(71) Applicant: CMT Costruzioni Meccaniche e Tecnologia S.p.A., I-12010 Peveragno (CN) (IT)
(72) Inventor: Tomatis, Stefano, 12010 Peveragno (CN) (IT)
(74) Representative: Spandonari, Carlo

(57) **Abstract**

The curd ripening apparatus comprises a perforated cylindrical drum, rotatably supported within a trough-shaped casing (10) and having open ends abutting against opposite walls of the casing, one of which has an outlet aperture (52) partly coinciding with the open end of the drum (42), while a supply pipe of curds and whey goes through the other wall, within the drum (42). The outlet aperture is closable by a crescent-shaped shutter (54) having a sharp edge to slice the curds being delivered. The casing can be inclined towards said outlet aperture.

## Description

This invention is concerned with a curd ripening apparatus for the dairy industry, particularly in the production of pastafilata cheese.

In the modern cheese industry, curd is usually prepared by coagulating milk in cheesemaking vats, by subsequently shredding the curds in order to remove the whey from the curds, and finally by pumping the mix of whey and curd lumps through suitable ducts to the following treating apparatus. Subsequent processing generally includes a ripening rest time, before the curds, being properly drained and ripened, finally undergo stretching and/or moulding to obtain the desired product. Moreover, although in certain types of processing the curds are drained immediately after breaking-up and are left to ripen in a substantially dry condition, according to other kinds of processing it is preferred that ripening takes place partly while the curds are still soaked in the whey, so that the whey will partly absorb, by osmosis, the lactic acid that is produced when lactose is transformed under the action of ferments. Consequently, depending on the kind of the cheese that is to be produced, not only the overall rest time for curd ripening will vary, but also the fraction of the rest time that the curds should remain soaked in the whey. Finally, depending on the kind of product, the curds should be drained (or dried) to a different degree, the curds being preferably more moist (i.e. richer in whey) in the production of soft cheese, and drier in the production of hard cheese.

In the past, in order to implement, in each situation a processing cycle having the desired ripening rest time, under whey and dry, the producer has had to use *ad hoc* expedients, such as resting the curds in the cheesemaking vat, or resting it on an airing tray, etc. Such expedients usually do not properly agree with the requirements for mechanization and process continuity of a modern dairy.

The main object of the invention is therefore to provide a curd ripening apparatus which can operate with full mechanization, which affords a uniform draining of the curds and which offers a wide range of options concerning the rest times for curd ripening, both under whey and after draining.

Another object is to provide a ripening apparatus which can be incorporated in the processing cycle without disrupting the smoothness of product transfer along the processing line, even when the processing parameters are changed.

The above objects, as well as other objects and advantages such as will result from the following disclosure, are achieved by the invention with a curd ripening apparatus having essentially the features recited in claim 1.

The invention will now be disclosed in more detail, with reference to a preferred embodiment shown in the attached, partly diagrammatical drawings, which are given by way of illustrative, non-limiting example, and wherein:
Fig. 1 is a view in side elevation and in longitudinal cross-section of a curd ripening apparatus according to a preferred embodiment of the invention;
Fig. 2 is a view in transverse cross-section, made along line II-II of Fig. 1;
Fig. 3 is an end view in the direction of arrow III in Fig. 1;
Fig. 4 is an end view in the direction of arrow IV in Fig. 1, with lowered shutter; and
Fig. 5 is a view similar to Fig. 4, with raised shutter.

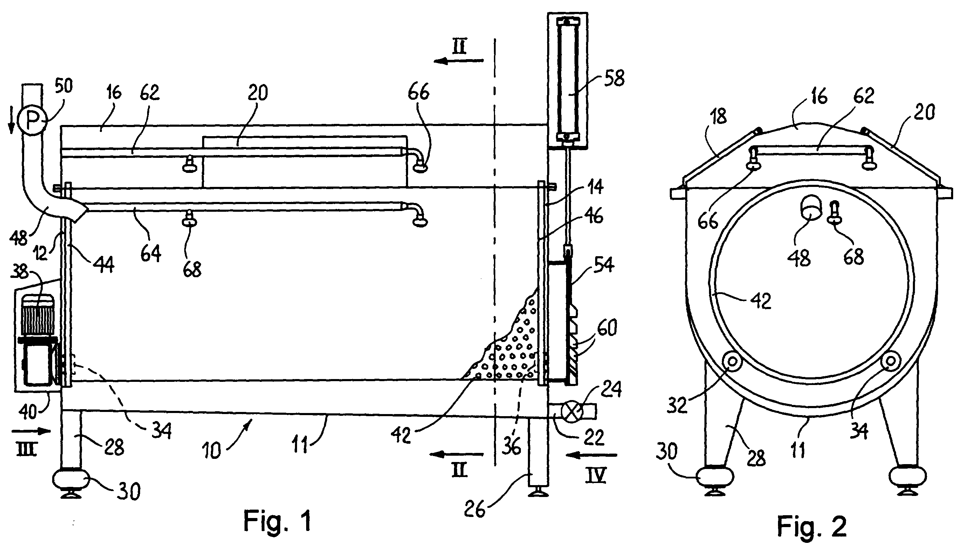

With reference to Figs. 1 to 5, a ripening apparatus according to the preferred embodiment of the invention comprises a casing 10, preferably made of steel plate, comprising a trough-shaped side wall 11 with a slightly inclined bottom, and flat, vertical end walls 12 and 14, and an upper, arched lid 16 having inspection ports closed with doors 18, 20. An exhaust port 22, provided with a shutting valve 24, opens in the lowest point in the bottom of the casing. Casing 10 rests on feet 26 at one end, and on feet 28, provided with air-bag jacks 30, at the other end.

End walls 12 and 14 of casing 10 rotatably support respective pairs of rollers such as 32, 34, 36, projecting within the casing, slightly above its bottom. Roller 34 is driven by a reversible motor 38 with reduction gear, which is mounted outside wall 12 within a housing 40. The remaining rollers are idle.

Rollers 32, 34, 36 support a cylindrical drum 42 of perforated steel plate, open at both ends and provided with gaskets 44, 46, of a low-friction synthetic material such as polytetrafluoroethylene, at its edges. Drum 42 extends over the entire inner space of the casing. When motor 38 is operated, roller 34 engages the periphery of cylindrical drum 42 by friction, and drives it in rotation, while gaskets 44, 46 form a rough seal with the respective end walls 12, 14.

A duct 48 goes through wall 12 into the space enclosed by cylindrical drum 42, and is intended to be supplied with curds mixed with whey through a pump 50, from a cheesemaking vat not shown, as known in the art.

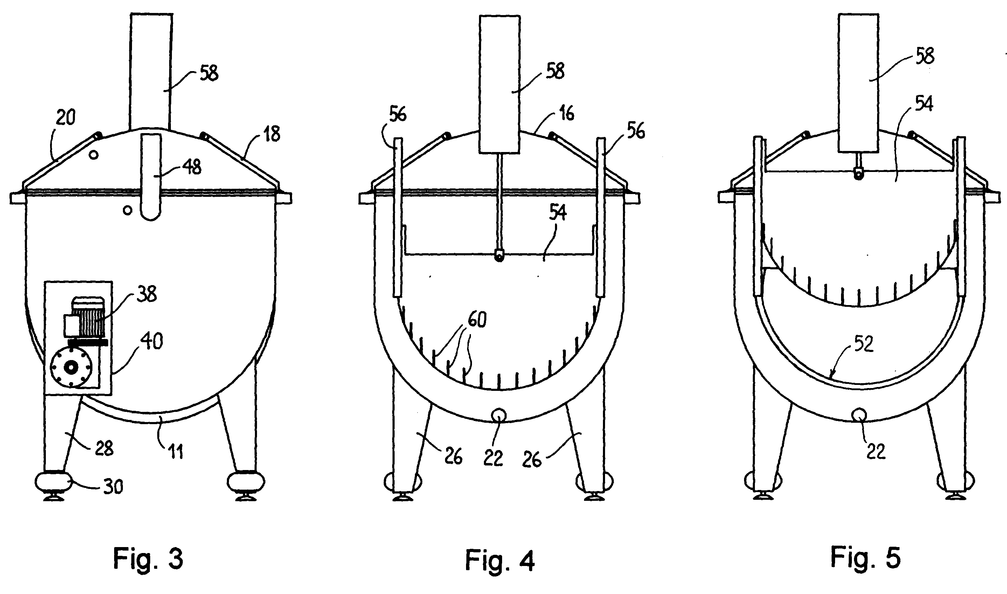

End wall 14 has a wide crescent-shaped aperture 52, which is framed by a border of metal plate, within the profile of cylindrical drum 42. A guillotine shutter 54 is slidable in vertical guides 56, under the action of an air cylinder 58, between a shutting position where aperture 52 is closed, as shown on Fig. 4, and an opening position, as shown on Fig. 5. Preferably, shutter 54 has a sharp lower edge to act as a cutting blade, and, moreover, its outer side is provided with a plurality o vertical knives 60, at right angles to the shutter.

The above-described ripening apparatus is intended for installation within a mechanized cheese production line, and is operated as follows. While shutter 54 and exhaust 22 are both closed, pump 50 draws broken curds and whey through duct 48 from a cheesemaking vat not shown and delivers it to drum 36, where the solid curds are retained within the drum, while the whey is free to flow to the bottom of the casing through the perforations in the drum. It should be noted that only a rough sealing is required between gaskets 44, 46 and their respective end walls, in consideration of the coarse size of the curd lumps.

The curds are now allowed to ripen under whey for a desired time (possibly null), while drum 42 is kept in slowly rotation, which may possibly be alternate and/or intermittent, in order to insure that the entire curd mass is uniformly treated. When the time prescribed for ripening under whey has elapsed, valve 24 is opened to drain the whey, and the curds continue to ripen in dry condition for a further desired time, the drum being maintained in more or less fast rotation, depending on the desired degree of curd draining.

Finally, when the overall rest time has elapsed, while drum 42 is maintained rotating in order to reduce the curds to a coherent, substantially cylindrical mass, shutter 54 is raised and jacks 30 under feet 28 are operated to incline the ripening apparatus (to the right on Fig. 1), so that the cylindrical curd mass, subjected to the rotation of the drum, is progressively and slowly fed forward through aperture 52. During the feeding motion shutter 54 is preferably lowered and raised rhythmically, so that it will act as a slicing blade to cut a thin slide from the curd mass at each step, while knives 60 cut the slice into blocks. The blocks fall into further processing means, not shown, such as a hopper, a conveyor belt, an auger or a simple airing tray.

The ripening apparatus of the invention is preferably provided with an automatic cleaning system comprising pipes 62, 64, which project into the casing, respectively outside and inside cylindrical drum 42, and which are provided with cleaning sprinklers such as 66, 68, as known in the art.

As a person skilled in the art will readily realize, every parameter in the process can be remotely controlled and adjusted with full mechanization, e.g. from a control panel, so that the amount and the feeding speed of the curd mass and/or of the whey, the rest times under whey and in dry condition, etc., all can be adjusted without having to manually operate on the equipment or the product.

Obviously, many changes may be made to the preferred embodiment of the curd ripening apparatus as described above. By way of example, the friction engagement of driving roller 34 with drum 42 might be replaced with a pinion-and-wheel engagement, for a more robust driving. The supply duct 48 might be placed axially to the drum, and in that case the supporting rollers 32, 34 might be replaced with a conventional axial bearing. These and other changes and modifications, such as are obvious for the person skilled in the art, should be regarded as falling within the scope of the inventive concept.

## Claims

1. Curd ripening apparatus, characterized in that it comprises a perforated cylindrical drum, which is provided with supply means for the curds and whey, is rotatably supported within a trough-shaped casing, and has an open end abutting against a first flat wall of the casing, said first wall of the casing having an outlet aperture which coincides at least partly with said open end of the drum and which is closable by a shutter, said casing being inclinable towards said outlet aperture.

2. Curd ripening apparatus of claim 1, characterized in that the bottom of said casing has a shuttable exhaust port.

3. Curd ripening apparatus of claim 1 or 2, characterized in that said casing has a second flat wall, opposite and parallel to said first flat wall, and in that both ends of said drum are open and abut said first and second flat walls of the casing, respectively, in sliding contact.

4. Curd ripening apparatus of claim 3, characterized in that said drum is rotatably supported on at least two pairs of rotatable rollers projecting from said first and second flat walls of the casing, respectively.

5. Curd ripening apparatus of claim 4, characterized in that at least one of said rollers is driven in rotation by motor means, whereby the drum is driven in rotation.

6. Curd ripening apparatus of one of claims 3 to 5, characterized in that the edges of the opposite open ends of the drum are provided with elastic sealing gaskets.

7. Curd ripening apparatus of one of claims 3 to 6, characterized in that said curd-and-whey supply means comprise a pipe entering the cylindrical drum through the second end wall of the casing.

8. Curd ripening apparatus of one of claims 1 to 7, characterized in that the casing is supported on two pairs of feet, at least one pair of feet being extensible by menas of jacks to incline the casing.

9. Curd ripening apparatus of one of claims 1 to 8, characterized in that said shutter is structured as a crescent-shaped blade adjacent to said outlet aperture and vertically movable under control of a linear actuator.

10. Curd ripening apparatus of claim 9, characterized in that one edge of said shutter is sharp, so that it acts a cutting blade for the curds coming out through said outlet aperture.

11. Curd ripening apparatus of claim 10, characterized in that the external side of said shutter carries perpendicularly projecting, vertical knives.

12. Curd ripening apparatus of one of claims 1 to 11, characterized in that a cleaning pipe, provided with cleaning sprinklers, projects from at least one of said first and second end walls of the casing.
